Europäisches Patentamt

European Patent Office

Office européen des brevets

(11) Publication number: **0 039 772**
**B1**

(12) **EUROPEAN PATENT SPECIFICATION**

(45) Date of publication of patent specification: **19.06.85**

(21) Application number: **81102420.7**

(22) Date of filing: **31.03.81**

(51) Int. Cl.⁴: **G 01 D 15/18, B 41 J 3/04,
H 04 N 1/024, G 06 K 15/00**

(54) Multinozzle ink jet printer and method of operating such a printer.

(30) Priority: **09.05.80 US 148472**

(43) Date of publication of application:
**18.11.81 Bulletin 81/46**

(45) Publication of the grant of the patent:
**19.06.85 Bulletin 85/25**

(84) Designated Contracting States:
**DE FR GB IT**

(56) References cited:
**DE-A-1 960 522
DE-A-2 444 517
GB-A-1 346 619
US-A-3 600 955
US-A-3 769 627
US-A-3 836 912**

(73) Proprietor: **International Business Machines
Corporation
Old Orchard Road
Armonk, N.Y. 10504 (US)**

(72) Inventor: **Fillmore, Gary Lee
5012 Holmes Place
Boulder Colorado 80303 (US)**
Inventor: **Martin, Van Clifton
1036 Albion Way
Boulder Colorado 80303 (US)**
Inventor: **Ream, Gregory Lawrence
1124 E. 5th Avenue
Longmont Colorado 80501 (US)**

(74) Representative: **Hobbs, Francis John
IBM United Kingdom Patent Operations Hursley
Park
Winchester, Hants, SO21 2JN (GB)**

Courier Press, Leamington Spa, England.

## Description

The invention relates to multinozzle ink jet printers and methods of operating such printers.

The use of ink jet printers for printing data and other information on a strip of recording media is well known in the prior art. One type of conventional ink jet printer, early examples of which are described in DE—A—1,960,522 and GB—A—1,346,619, incorporates a plurality of electrical components and fluidic components. The components coact to enable the printing function. The fluidic components include a print head having a chamber for storing a printing ink and a nozzle plate with one or more ink nozzles interconnected to the chamber. A gutter assembly is positioned downstream from the nozzle plate in the flight path of ink droplets. The gutter assembly catches ink droplets which are not needed for printing on the recording medium.

In order to create the ink droplets, a drop generator is associated with the print head. The drop generator produces a perturbation at a frequency which forces thread-like streams of ink, which are initially ejected from the nozzles, to be broken up into a series of ink droplets at a point (called the break-off point) within the vicinity of the nozzle plate.

A charge electrode is positioned along the flight path of the ink droplets. Preferably, the charge electrode is positioned at the break-off point of the ink droplets. The function of the charge electrode is to selectively charge the ink droplets as they break off in proximity to the charge electrode. A pair of deflection plates is positioned downstream from the charge electrodes. The function of the deflection plates is to deflect a charged ink droplet either into the gutter or onto the recording media.

Another type of conventional ink jet printer incorporates a plurality of magnetic components and fluidic components. The fluidic components are substantially equivalent to the fluidic components previously described. However, the electrical components are replaced with magnetic components for influencing the direction of travel of the droplet streams. This type of ink jet printer is well known in the prior art and, therefore, the details will not be described.

One of the problems associated with ink jet printers of the aforementioned types, is the generation of "satellite droplets". The satellite droplets are usually smaller in size than the droplets used for printing (hereinafter called print droplets) and are usually interspersed therewith. Although the print droplets can be controlled electrically or magnetically so as to reproduce copies with acceptable print quality, it is extremely difficult, if not impossible, to control the satellite droplets.

In the first instance, the satellite droplets tend to merge with the print droplets. The newly formed droplets (that is the print droplets plus the satellite droplets) usually have different charge to mass ratios. Also, the newly formed droplets (hereinafter called merged droplets) tend to travel at a different velocity from that of the normal print droplets. As was stated previously, printing is done by the droplets propelled in a controlled manner to impinge on the recording medium. When a mixture of merged droplets and normal print droplets are propelled towards the recording medium, the nonuniform properties of the droplets cause inaccurate placement of the droplets on the recording medium. This inaccurate drop placement results in poor print quality.

Even when the satellite droplets do not merge with the print droplets, they tend to assume an independent flight path. The result is that the satellite droplets either impinge the recording medium randomly (that is at the wrong position) or impinge the components positioned around the flight path of the droplets. Where the satellite droplets impact the recording medium at the wrong position, the print quality is poor. Similarly, where the satellite droplets impinge on the components, the reliability of the ink jet print system is reduced since the droplets wet the electrical components resulting in an electrical short circuit.

DE—A—1,960,522 discloses an arrangement for testing and correcting the phasing of ink drops relative to data signals.

DE—A1—2,444,517 describes an arrangement for varying the size of the ink drops produced in an ink jet printer.

GB—A—1,346,619 discloses a system for modifying the charge applied to an ink drop to compensate for the effect of the charge on the preceding drop.

US—A—3,600,955 discloses an ink jet printing system which incorporates an ink drop velocity measuring circuit connected to means for visually indicating the drop velocity.

US—A—3,769,627 describes an ink jet printing system in which an optical arrangement is used to detect the passage of ink drops.

US—A—3,836,912 discloses a multiple nozzle ink jet printing arrangement incorporating an inductive device for sensing the charges on the ink drops.

US—A—3,836,912 discloses a multiple nozzle ink jet printing arrangement incorporating an inductive device for sensing the charges on the ink drops.

The invention seeks to provide a multinozzle ink jet printer which is operable with a "print window" free from satellite droplets.

According to one aspect the invention comprises a multinozzle ink jet printer in which, in operation, streams of ink are emitted from a multinozzle plate and broken up into individual droplets of ink by applying a constant frequency driving voltage to a piezoelectric crystal, charge electrode means charge selected ones of the droplets and sensing means senses charged droplets in each of the streams at a predetermined distance from the nozzle plate, and which is characterised by including a variable voltage driver means to provide said driving voltage, the variable voltage driver means being responsive to a driving voltage adjustment signal, electronics means responsive to the output of the sensing means to generate a set of flight time signals indicative of droplet flight times for each of said streams i.e. the time elapsing between drop charging and sensing of a charged ink droplet, means to record and compare said set of flight time signals to determine the stream with the minimum flight time, that is the weakest driven stream, and the stream with the maximum flight time, that is the strongest driven stream, and controller means responsive to said set of signals to generate said driving voltage adjustment signal in order to adjust the amplitude of the driving voltage so that the droplets in the weakest and strongest driven streams break off at the same distance from the nozzle plate.

By ensuring that the droplets in the weakest and strongest streams break off at the same distance from the nozzle plate, a "print window" is maintained free from satellite droplets.

According to another aspect of the invention, a method of operating a multinozzle ink jet printer includes

(a) generating a plurality of continuously flowing capillary ink streams,

(b) applying a stimulating signal to break up the capillary streams into droplet streams,

(c) placing an electrical charge on the droplets at the instant of break-off from the capillary streams, and

(d) sensing the charged droplets at a point downstream from the breakoff, and is characterised by

(e) calculating the time elapsing from droplet break-off to droplet sensing to produce an elapsed time signal;

(f) recording the elapsed time signal;

(g) repeating steps (c)—(f) of this claim for each stream;

(h) comparing the recorded times to determine the minimum and the maximum;

(i) identifying the stream with the minimum recorded time as the weakest driven stream and the stream with the maximum recorded time as the strongest driven stream; and

(j) adjusting the stimulating signal until the break-off distance for the strongest driven stream is identical to the break-off distance of the weakest driven stream.

The ideal "print window" is maintained by driving the drop generator through a closed-loop servo system so that the ink droplets in the weakest and strongest driven streams break off at the same distance from the nozzle plate.

The invention will now be described by way of example, with reference to the accompanying drawings, in which:—

FIG. 1 is a schematic diagram which represents the interrelation between the drop generator drive voltage and the distance from the nozzle plate at which a droplet detaches from a capillary stream in a single nozzle head;

FIG. 2 is a schematic diagram showing the relation between drop generator drive voltage and break-off distance for a multinozzle head;

FIG. 3 is a schematic diagram of a servo-controlled ink jet printer embodying the invention;

FIG. 4 is a block diagram of an electronic circuit for measuring time of flight;

FIG. 5 is a block diagram of an electronic circuit which generates a variable voltage for driving the drop generator;

FIG. 6 is a graphical representation of the charging voltage for a droplet;

FIG. 7 is a graphical representation of a current waveform induced in a drop sensor wire;

FIG. 8 is a plot of phase versus stream number for an overdriven print head;

FIG. 9 is a graphical representation of an underdriven print head; and

FIG. 10 is a flowchart of the processing steps for programming the controller of FIG. 3.

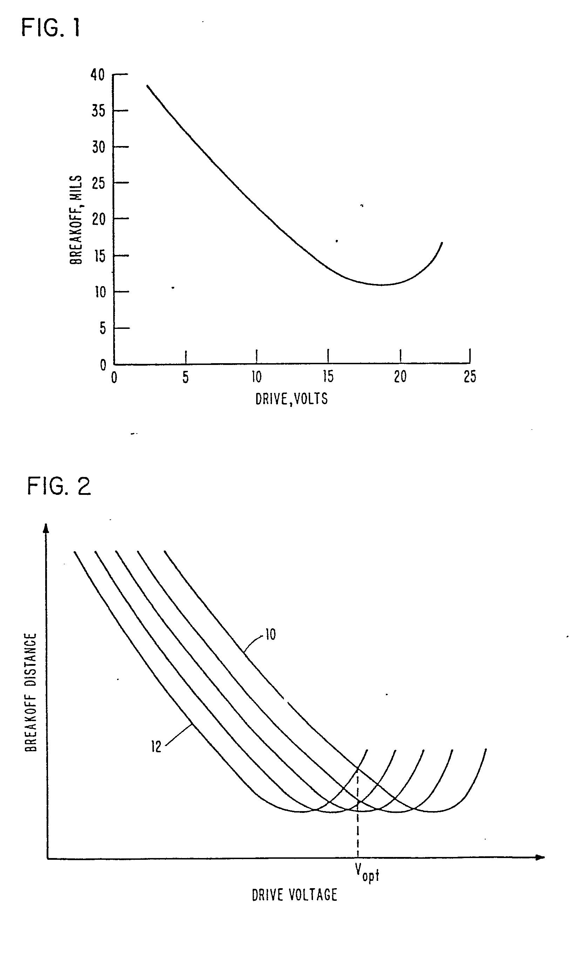

As used in this specification, the term "break-off distance" means the distance between the exit from the nozzle plate and the point at which droplets detach from the capillary streams ejected from the nozzle plate. As can be seen from FIG. 1, which is a typical plot of break-off distance versus the voltage placed on the drop charge generator, the break-off distance is strongly affected by the perturbation placed on the capillary stream by the drop generator. As the driving voltage increases, the break-off distance decreases to a minimal point. In FIG. 1, the minimal point is within the vicinity of 250 microns (ten mils). This minimum will vary depending on several characteristics of the ink jet printer such as ink properties and head properties. Any increase in drive voltage beyond that resulting in the minimal break-off distance will cause an increase in the break-off distance. Stated another way, if one drives the drop charge generator with a voltage greater than the voltage which generates the minimum break-off distance, the break-off distance will begin to increase. It has been determined by empirical means that it is most advantageous to drive the drop generator with a voltage which forces break-off to occur at the minimum distance from the nozzle plate. When an ink jet head is operated at this point, the creation and effect of satellite droplets are significantly reduced if not eliminated. The plot in FIG. 1 relates to a single nozzle head.

For a multinozzle head (that is a head having a plurality of droplet streams), operation at the minimum break-off point is equally important. However, this goal is often illusive primarily because in a multinozzle head, the perturbation along the longitudinal axis of the array is nonuniform. Due to the nonuniform perturbation, each stream will reach its minimum at a slightly different drive voltage. This effect is shown in FIG. 2. Each curve in FIG. 2 represents a stream in a multinozzle head, i.e. FIG. 2 represents a multinozzle head having five capillary streams. As is shown in FIG. 2, stream 10 represents the weakest driven stream while stream 12 represents the strongest driven stream. As was stated previously, the goal is to operate the head in a satellite-free region. The satellite-free region occurs where the streams are detaching at the minimum distance from the nozzle plate, hereinafter called the minimum break-off point. Since the streams are breaking off at different points in a multinozzle head, the optimum operating point for the multinozzle ink jet system is the point where the variation in break-off distance between the streams is at a minimum. This operating point occurs where the curves for the weakest driven stream 10 and the strongest driven stream 12 intersect. The optimum voltage which ensures that the streams will be breaking off at this point is identified in FIG. 2 as $V_{opt}$. The break-off distance of all streams is now contained between the minimum break-off and break-off of the strongest/weakest driven stream.

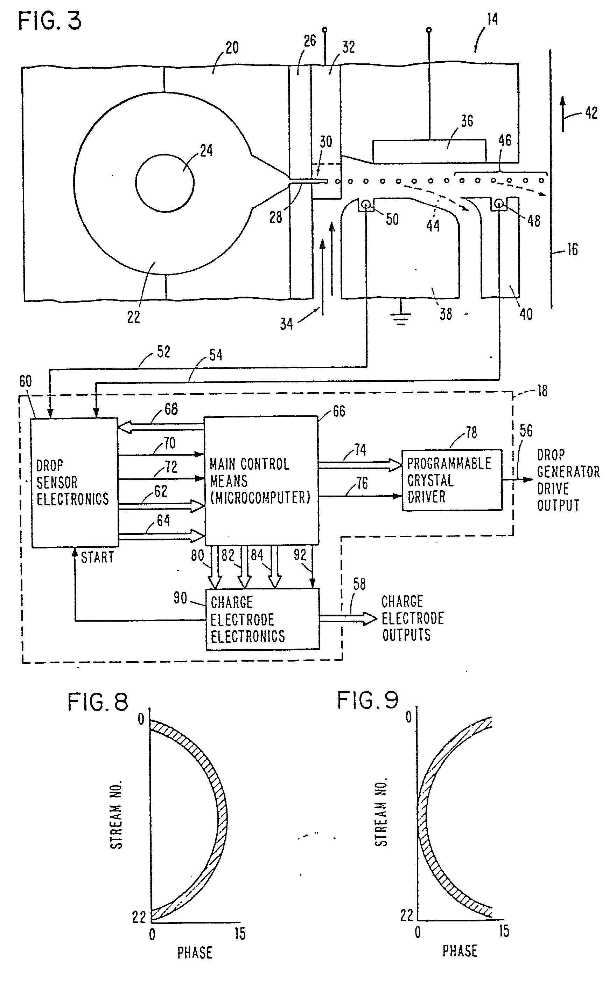

Referring now to FIG. 3, a block diagram of an ink jet printing system embodying the present invention is shown. The ink jet printing system is controlled so that the break-off distances of the capillary streams are maintained within a mini-mum range. The ink jet printing system includes a print assembly 14, a recording medium 16 and a controller system 18. The function of the print assembly 14 is to generate droplet streams which print data onto the recording medium 16. The print assembly 14 includes a head body 20 which may be of any desired shape, for example rectangular or circular. The head body 20 is fitted with a fluid cavity 22 which is supplied with a pressurized print fluid such as an electrically conductive ink. A piezoelectric crystal disturbance means 24 is placed within the conductive fluid. A nozzle plate 26 is firmly attached to head body 20. The nozzle plate is fabricated with a plurality of orifices, only one of which is shown in FIG. 3 and identified as 28. The nozzle orifice interconnects the fluid cavity with the face of the nozzle plate. The pressurized print fluid previously mentioned, is extruded as a thread-like or capillary stream from the nozzle orifice. Element 30 (FIG. 3) represents one of the capillary streams of print fluid. When an appropriate drive voltage is applied to the disturbance means 24, a pressure front is developed in the print fluid. The pressure front extends in a direction perpendicular to the orifices in the nozzle plate. As a result, the thread-like or capillary stream of print fluid 30 is broken up into a series of droplets at a point downstream from the nozzle plate. The point at which the droplets are detached is referred to in this specification as the break-off point.

Still referring to FIG. 3, downstream from the nozzle plate at the break-off point, a charge electrode assembly 32 is positioned. The function of the charge electrode assembly 32 is to charge or not charge individual droplet streams as they break off from the capillary streams. The charge electrode assembly includes sufficient charge electrodes for charging each stream individually. The print assembly may be fitted with an airflow tunnel 34. The airflow tunnel 34 supplies air to flow colinearly with the droplets. Positioned downstream from the charge electrode assembly is a deflection electrode arrangement which includes an upper deflection plate 36 and a lower deflection plate 38. Either the upper deflection plate 36 or the lower deflection plate 38 can be maintained at a positive potential while the other deflection plate is maintained at a negative or ground potential. In the preferred embodiment of this invention, the upper deflection plate 36 is maintained at a negative potential while the lower deflection plate is maintained at ground potential. Downstream from the deflection electrode arrangement is a gutter assembly 40 which catches droplets of print fluid not needed for printing on the recording medium 16. In the preferred embodiment of this invention, the recording medium is paper and travels in the direction shown by arrow 42 at a predetermined velocity. When a droplet is charged, the charge droplet is deflected into gutter assembly 40 along no-print flight path 44. Similarly, an uncharged droplet travels along print path 46 for printing on the paper.

Still referring to FIG. 3, a sensor means 48 is mounted within grounded gutter assembly 40. The sensor means is mounted so that it runs orthogonal to the droplet streams. The function of the sensor means 48, hereinafter called drop charge sensor, is to generate a current signal waveform when charged droplets pass within its vicinity. It is worthwhile noting that the drop charge sensor 48 need not be placed within the gutter assembly. However, by placing the drop charge sensor within the grounded gutter assembly, it is electrically shielded from electrical noise. As will be explained subsequently, the current signal developed in drop charge sensor 48 is processed by control system 18 to generate the charging phases for the streams and for measuring the time of flight (TOF) of the droplets (from the break-off to the drop charge sensor 48). The time of flight is used to monitor relative break-off time (distance) to control the piezoelectric crystal drive amplitude so that the spread of break-off times (distances) between streams is minimized. Although a plurality of sensing means can be used for drop charge sensor 48, in the preferred embodiment of this invention the drop charge sensor is a single conductor. As charged droplets pass over the wire, a current is induced therein. A more detailed description of an inductive type sensor which may be used in this invention, is described in U.S. Patent 3,977,010.

Although a single drop charge sensor 48 can be used to measure the passage of charged droplets, in an alternative embodiment of the invention, a second drop charge sensor 50 is positioned in the lower deflection plate. The drop charge sensor 50 is also positioned orthogonal to the plurality of droplet streams. The characteristics, function and construction of drop charge sensor 50 are identical to that of drop charge sensor 48 and, therefore, will not be described any further. Suffice it to say that by utilizing a second drop charge sensor spaced from the first drop charge sensor, the velocity and/or the flight time of a droplet can be determined more accurately. Moreover, if the second sensor is located relatively close to the point of break-off, a more accurate determination of absolute break-off distance and relative break-off difference between streams is possible.

Still referring to FIG. 3, the signals outputted from drop charge sensors 48 and 50 are fed over conductors 52 and 54 respectively, into control assembly 18 which produces output control signals on conductors 56 and 58. The control signal on conductor 56 is used to servo control the disturbance means 24 which is sometimes referred to as the drop generator. Similarly, the control signals on terminals 58 are used for driving the charge electrode assembly 32.

The control system 18 includes drop sensor electronics means 60 which receives sensor output signals from conductor 54 and/or conductor 52 and generates drop arrival time signals and amplitude signals. These sets of signals (that is the amplitude signals and the drop arrival time signals) are fed over multiplexor buses 62 and 64 respectively, into a main control means 66. Although the main control means 66 can be fabricated from discrete logic and/or circuit components, in the preferred embodiment of this invention the main control means 66 is a conventional microcomputer. The microcomputer outputs control signals such as gain control signals over multiplexor bus 68 to drive the drop sensor electronics means 60. Status information is transmitted over simplex bus 70 and simplex bus 72 to the microcomputer. The microcomputer outputs a control word over multiplexor bus 74 and an enabling signal over simplex bus 76. The signal on simplex bus 76 enables the programmable crystal driver means 78. The control word on multiplexor bus 74 is utilized by the programmable crystal driver means 78 to control the amplitude of the signal supplied to the drop charge generator. A detailed description of the circuit comprising the drop charge sensor electronics means 60 and the programmable crystal driver means 78 will be given shortly.

The microprocessor also generates control signals for phasing break-off. Phasing is the process by which droplets detaching from the capillary streams are supplied with a charge pulse. Ideally, the phase of relationship between the charging pulse and the break-off is such that the drop break-off time is positioned within the mid-point of the charging pulse. By so doing, a maximum charge is supplied to the droplets. To this end, a plurality of control signals are generated by the microcomputer and supplied over multiplexor buses 80, 82 and 84 respectively, to the charge electrodes' electronics driver means 90. By way of example, mode information, drop count information and stream select information, are some of the control data that are generated by the microprocessor and transmitted over the multiplexor buses to the charge electrode driver means 90. Enabling or initiating operation of the charge electrode driver means is started by an enabling signal over simplex bus 92. Since the procedure of phasing is well known in the prior art and does not form part of the present invention, the operation of the phasing associated with the main control means 66 will not be described. Suffice it to say that the charge electrode driver means 90 includes a charge electrode waveform generator and individual driver circuits for driving the individual charge electrodes located in charge electrode assembly 32. A more detailed description of phasing is given in IBM Technical Disclosure Bulletin, Vol. 22, No. 7, December 1979, Page 2666.

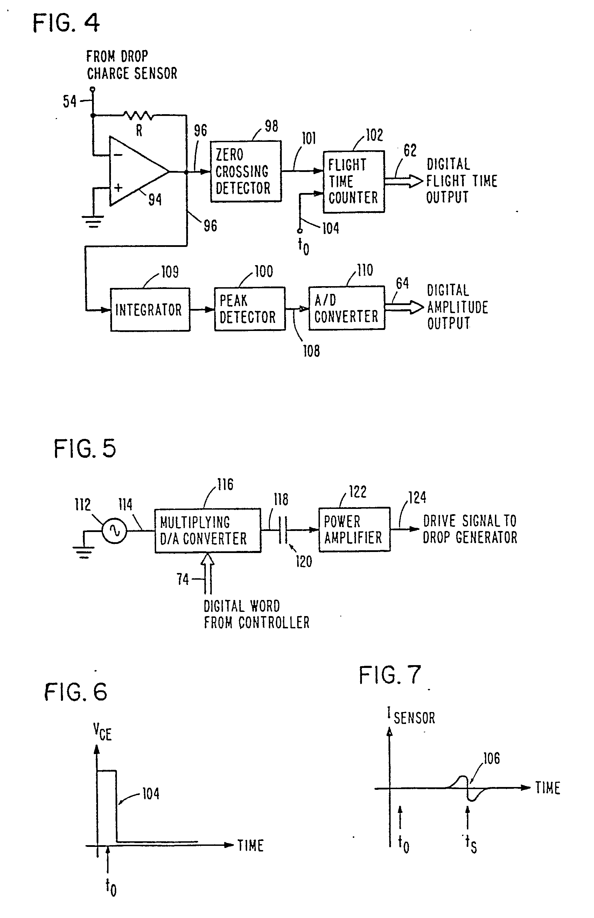

Referring now to FIG. 4, a detailed circuit of the drop sensor electronic means 60 (FIG. 3) is shown. As was stated previously, a charged droplet or group of droplets passing over drop charge sensor 48 induces a current waveform therein. It should be noted that if one elects to use both drop charge sensors 50 and 48 to measure time of flight of charged droplets, then a circuit identical to that shown in FIG. 4 would be designed to process the signal generated in sensor 50 (FIG. 3). Since both circuits would be identical, only one of the circuits, and in particular, the circuit associated with drop charge sensor 48, will be described in detail. As a charged drop or group of drops passes over drop sensor 48, a current is induced in the wire. A signal indicative of the current waveform is outputted on conductor 54 and fed into a transimpedance operational amplifier means 94 which includes a two-input operational amplifier with its output fed back to the negative input. A resistor (R) is placed within the feedback loop to control the gain of the amplifier. The signal received on conductor 54 is amplified and outputted on conductor 96. From conductor 96, the signal is fed into zero-crossing detector 98 and peak detector 100. The zero-crossing detector network 98 is a conventional network which outputs a signal ($t_s$) on conductor 102 when a sinusoidal signal is changing from positive to negative or vice versa. The signal $t_s$ on conductor 101 disables (that is stops) flight time counter 102. Enabling (that is starting) the flight time counter to count is achieved by a control signal ($t_0$) on conductor 104. The count which is trapped in the flight time counter 102 signifies the time of flight for a droplet from break-off point until it is sensed by the sensor positioned downstream. The count is outputted on multiplexor bus 62 to microcomputer 66 (FIG. 3).

Turning for the moment to FIGS. 6 and 7, a graphical representation of a charge electrode voltage 104 and an induced current 106 is shown. At time $t_0$ as a droplet is detached from the capillary stream 30, FIG. 3, a charging pulse 104 is applied to the charge electrode. Simultaneously, a control pulse is generated by the microcomputer and is applied to the counter 102 over conductor 104. At some later time, $t_s$ the charge droplets now induce the current waveform 106 in drop sensor 48 (FIG. 3). When the droplet is positioned directly over the drop charge sensor, the zero-crossing detector will output a pulse on conductor 101 (FIG. 4). That pulse is used to stop the time-of-flight counter from counting. As such, $t_0$ enables the counter 102 while $t_s$ stops the counter. The trapped count signifies the time-of-flight for a particular droplet or group of droplets.

Returning now to FIG. 4, the signal which is outputted on conductor 96 is fed into integrator 109. The output of the integrator 109 is fed into peak detector 100 which is a conventional peak detector and detects the maximum amplitude of the integrated current. The amplitude signal is fed over conductor 108 into analog-to-digital converter 110. The output from the analog-to-digital converter 110 is fed over multiplexor bus 64 into the microcomputer. The microcomputer uses the digital amplitude signal for phasing the ink jet printing system.

Referring now to FIG. 5, a block diagram for the details of the programmable crystal driver means 78 (FIG. 3) is shown. The function of the programmable crystal driver means 78 is to dynamically adjust the voltage driving the piezoelectric crystal 24 (FIG. 3) until $V_{opt}$ (FIG. 2) is obtained wherein all the streams emanating from the nozzle plate are breaking off within a minimum range. The programmable crystal driver means includes a fixed signal source 112. In the preferred embodiment of this invention, the signal source 112 is a free-running oscillator which generates a signal at a fixed drop clock frequency and having a fixed amplitude. The signal is fed over conductor 114 into a conventional multiplying digital-to-analog converter 116. The multiplying digital-to-analog (D/A) converter 116 is fitted with a digital multiplexor input. Multiplexor bus 74 is connected to the multiplexor input. The variable digital control word which is outputted from the microcomputer, is fed over multiplexor bus 74 into the D/A converter. The multiplying converter combines the fixed signal outputted on conductor 114 with the variable control word outputted from the digital computer to generate a variable voltage which is outputted on conductor 118. The signal on conductor 118 is coupled through a coupling capacitor 120 into power amplifier 122. The power amplifier amplifies the signal and outputs the amplified signal on conductor 124 which transmits the signal to drive the drop generator. In the preferred embodiment of this invention, the multiplying D/A converter multiplies the variable signal on multiplexor bus 74 with the fixed signal on conductor 114.

As was stated previously, the main control means 66 (FIG. 3) is a conventional microcomputer. Any type of conventional microcomputer can be utilized. By way of example, the M6800 microcomputer, manufactured by Motorola Semiconductor, Inc. is a suitable microcomputer. This microcomputer has its given instruction sets, which can be utilized by one having ordinary skill in the art of programming, to generate a machine program in accordance with a series of process steps to be given hereinafter. The M6800 includes a microprocessor module coupled to adequate storage. Since this microprocessor is well known in the art, details of its operation, will not be given hereinafter.

Having described the apparatus for driving the drop-charge generator, the process steps or method in which the apparatus is used to determine the optimum voltage ($V_{opt}$) will now be described. A broad description of the process steps will be given followed by a detailed description aided by a flowchart. As was stated previously, the optimum operating point of the system, be it a single nozzle or multinozzle ink jet printer, is within the vicinity of minimum break-off distance. For a single nozzle stream, the minimum break-off distance is determined and the voltage which is associated with that minimum break-off is maintained as the optimum voltage for driving the drop generator. In a multinozzle head, the weakest driven stream is determined and the strongest driven stream is determined. In order to determine the weakest driven stream and the strongest driven stream, the following procedure is followed:

Step 1

For each stream in the multiple array, a relatively low drive voltage (say between six and ten volts) is applied to the drop generator. As a drop is detaching from the stream, a voltage is applied to the charge electrode.

Step 2

At a point downstream from the break-off point, the drop sensor and associated electronic circuit measure the time of flight of the droplet. This time of flight is recorded.

Step 3

The recorded flight times are investigated. The jet having the longest flight time is the strongest driven jet while the jet having the shortest flight time is the weakest driven jet.

Step 4

The drive to the drop charge generator is increased and the flight time for each jet (that is the strongest driven jet and the weakest driven jet) is monitored. The process, that is increasing the drive voltage, is continued until the two flight times are identical. When the flight times are identical, the corresponding voltage is the optimum voltage ($V_{opt}$, see FIG. 2) for driving the system.

Assuming that the spread in break-off distance is less than one wavelength, another method which can be used to determine the break-off position of the stream is the so-called phasing method. With the phasing method, the phasing characteristics of the streams are used to determine the optimum drop generator drive voltage ($V_{opt}$). In the phasing method, the period of the clock which is used for driving the drop generator is divided into a plurality of intervals, say N. During each of the N intervals, in turn, a signal is applied to the charge electrode of the weakest driven stream. The sensor senses whether or not a drop is charged. The procedure is continued until all N intervals have been tried. One or more of the charging signals will result in a charged drop. The centre of the packet of intervals which produces the charged drops is defined as the break-off for the stream. The procedure is repeated for the strongest driven stream. The drive voltage to the crystal drive is adjusted until the break-off charging phase is the same for the two streams. This voltage which creates the common break-off phase is the optimum drive voltage.

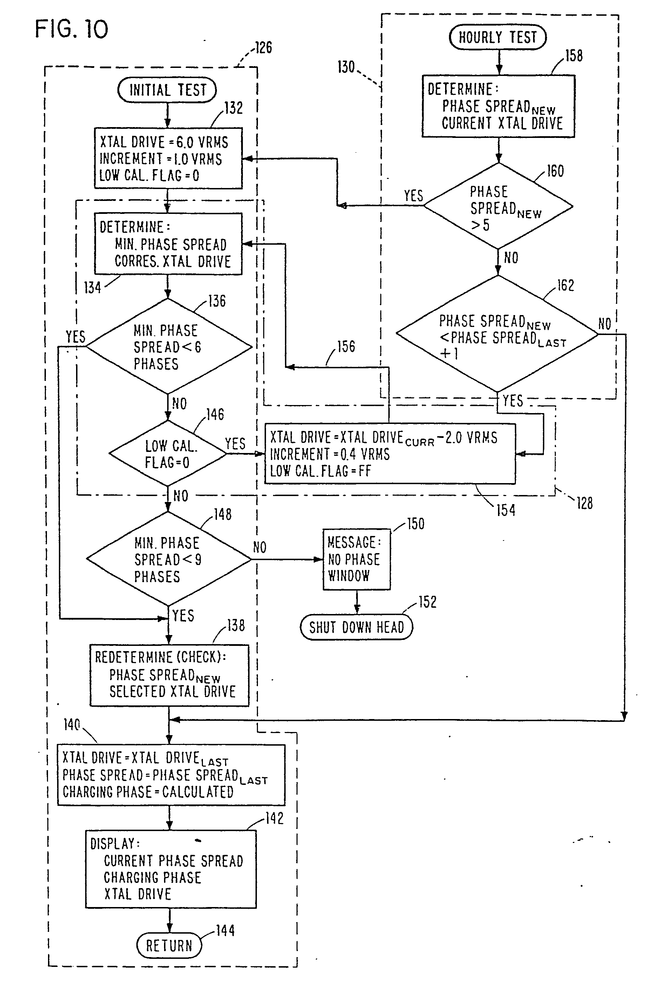

Yet another characteristic of the streams which can be measured to identify the minimum break-off spread and hence the optimum operating voltage ($V_{opt}$) is the break-off shape. In this method, the bowing of the break-off curve for all streams as the drop generator drive voltage changes, is used to determine whether the drive voltage should be increased or decreased and the optimum voltage ($V_{opt}$) for driving the drop generator determined. FIGS. 8 and 9 show a graphical representation of the bowing characteristics. In the figures, the charging phases are plotted against the stream numbers. The curve is obtained by noting the phase at which each stream is broken up into droplets and charged for a specific drive voltage. The convex curve in FIG. 8 represents an overdriven head while the concave curve of FIG. 9 represents an underdriven head. In operation, the controller records the phase and streams information. By interrogating the stored information and noting the shape of the curve, the optimum voltage for driving the drop generator is determined.

It is worthwhile noting that although the measurement of three stream characteristics has been described, it is within the skill of the art to measure other stream characteristics and use such characteristics to generate control signals to servo-control the drop generator.

FIG. 10 is a flowchart showing a routine for establishing and maintaining the optimum voltage for driving the drop generator. The flowchart is sufficient to enable one skilled in the art to program the microcomputer controller to perform the adjustment to establish and maintain the optimum voltage for driving the drop generator.

Essentially, the routine comprises an initial test path 126, a fine adjustment test path 128 and a periodic test path 130. At least the routine must incorporate initial test path 126. Particularly, the initial test path 126 is used to establish the minimum break-off spread and the optimum operating voltage with an increment of say one volt. If the initial test path does not establish the optimum drive voltage, then the fine adjustment test path is utilized with an increment of say 0.4 volt until the optimum operating voltage is determined. The periodic test path is utilized to periodically recheck the head after the optimum voltage has been determined. In the preferred embodiment of this invention, the periodic check was run at a frequency less than or of one hour.

The first block in the initial test path 126 is the initial test block. In effect, this is an entry block and indicates that the initial function of turning on the machine is performed. Block 132 shows the initial values at which the system is set up. By way of example, the crystal (XTAL) drive voltage is set at six volts ($V_{rms}$). The increment by which the initial voltage is increased is set equal 1.0 $V_{rms}$. Simultaneously a flag called the low calibration (CAL) flag is set equal to 0. From block 132 the program progresses to block 134. The function of block 134 is to determine the minimum phase spread corresponding to a particular crystal (XTAL) drive. In order to determine the minimum phase spread, a particular voltage is applied to the crystal drive. The break-off phase for each stream in the head is determined using the method previously described. As the break-off phase for each stream is obtained, it is recorded. From the recorded values, the minimum and maximum break-off phase is determined. The break-off phase spread for that specific head is determined by finding the difference between the maximum and minimum break-off phase. Having determined the minimum phase spread, the program then enters decisional block 136. In block 136, if the minimum phase spread is less than a predetermined number of phases (say 6 phases where one drop clock period has been divided into 16 phases) then the program exits the block along the yes-path into test block 138, the program checks to see that the phase spread is correct, the crystal drive is correct, and then exits the block into test block 140. In test block 140, the program sets the crystal drive equal to the last crystal drive that was calculated in block 138. The phase spread is set equal to the phase spread last calculated in test block 138 and the charging phase is calculated. The process for determining charging phase has been previously described and will not be repeated. From test block 140, the program enters test block 142. Test block 142, is in effect, a status block wherein the current phase spread, charging phase and crystal drive values are shown on a display. From the test block 142, the program exits at the return block 144.

Assuming that at decisional block 136, the phase spread was greater than six phases, then the program exits the block along the no-path into decisional block 146. The program then tests to see if the low calibrated flag was set equal to zero. If the flag is not set equal to zero, the program exits the block along the no-path into decisional block 148. In decisional block 148, the program tests to see if the minimum phase spread is less than nine phases. If it is, the program exits the block along the yes path into blocks 138, 140, 142 and 144, respectively. The function which the program performs in each of these blocks has been previously described and will not be repeated. However, if on testing the minimum phase spread in block 148, the program determines that it is greater than nine phases, then the program exits the block along the no-path into message block 150 and shutdown block 152. The message block signifies a display, informing the operator that there is no phase window suitable for charging the droplets. This means that the phase spread between the various break-off points of the streams is greater than a predetermined value, say τ/2 where τ equals the period of the drop clock. As a result of the wide phase spread, the drop break-off from all streams cannot be charged reliably with synchronous charge electrode voltages for printing. As a result, block 152 indicates that the processor shut down the printing system.

If on testing the low calibrated flag in decision block 146, the program determines that the flag is set to zero, then the program exits the block along the yes-path into operation block 154. In operation block 154 the crystal drive (XTAL DR) is set equal to the current value of the crystal drive minus two volts ($V_{rms}$). The incremental drive voltage is set for 0.4 volts ($V_{rms}$). The low calibrated flag (LOW CAL FLAG) is set equal FF (hex). Once the program sets up these initial conditions, the program exits operational block 154 along path 156 into operational block 134.

To enable optimum operation of the ink jet printing system, periodically the system is tested to see that the crystal drive voltage, the phase spread, etc., are still within an acceptable range. To ensure this, the periodic test path 130 is initiated for every hour the system is running. Of course, the test may be run at a higher or lower frequency than one hour intervals. The first block in the periodic test path 130 is an entry block. In the entry block the program enters the hourly check routine. From the entry block, the program descends into operational block 158. In operational block 158, the program determines the new phase spread. The new phase spread is determined by methods previously described. The test is performed at the current crystal (XTAL) drive. Both the new phase spread and the current crystal drive are recorded. The program then exits into decisional block 160. In decisional block 160, the program tests to see if the new phase spread is greater than five phases. If it is greater than five phases, the program exits the block along the yes-path into operational block 132 where the program progresses to identify the optimum crystal drive voltage in the method previously described. If the new phase spread is less than five phases, then the program exits decisional block 160 along the no-path into decisional block 162. In decisional block 162, the program runs a comparison test to see if the new phase spread is greater than the last phase spread set in block 140 plus one. If the new phase spread is not greater, then the program exits the block along the no-path into block 140 and the drive to the crystal is not adjusted. However, if the new phase spread is greater, then the program exits the block along the yes-path into block 154. In block 154, the program proceeds to fine-tune the crystal drive.

## Claims

1. A multinozzle ink jet printer in which, in operation, streams of ink are emitted from a multinozzle plate (26) and broken up into individual droplets of ink by applying a constant frequency driving voltage to a piezoelectric crystal (24), charge electrode means (32) charge selected ones of the droplets and sensing means (48, 50) senses charged droplets in each of the streams at a predetermined distance from the nozzle plate; the printer being characterised by including a variable voltage driver means (78) to provide said driving voltage, the variable voltage driver means being responsive to a driving voltage adjustment signal, electronics means (60) responsive to the output of the sensing means (48, 50) to generate a set of flight time signals indicative of droplet flight times for each of said streams i.e. the time elapsing between drop charging and sensing of a charged ink droplet, means (66) to record and compare said set of flight time signals to determine the stream with the minimum flight time, that is the weakest driven stream, and the stream with the maximum flight time, that is the strongest driven stream, and controller means (66) responsive to said set of signals to generate said driving voltage adjustment signal in order to adjust the amplitude of the driving voltage so that the droplets in the weakest and strongest driven streams break off at the same distance from the nozzle plate.

2. A printer as claimed in claim 1, in which the electronics means includes an operational amplifier (94); a zero-crossing electrical network (98) operably coupled to the operational amplifier; and a flight time counter (102), coupled to said zero-crossing electrical network, said flight time counter having an enabling input, a disabling input and an output.

3. A printer as claimed in claim 1 or claim 2, in which the variable voltage driver means (78) includes a multiplying digital-to-analog converter (116) having a reference signal input and a multiplying signal input; a capacitor (118) coupled to the output of said multiplying digital-to-analog converter; and a power amplifier (122) for amplifying a signal outputted from the capacitor.

4. A printer as claimed in claim 3, further including a signal generating means coupled to the reference signal input, said signal generating means being operable to generate signals having a fixed drop clock frequency and a fixed amplitude.

5. A printer as claimed in any preceding claim, in which the sensing means (48) is disposed within a gutter assembly (40) for catching droplets not used for printing.

6. A printer as claimed in claim 5, further including a second charged droplet sensing means (50), positioned transversely to the ink droplet streams and disposed between the charge electrode means and the gutter assembly.

7. Method of operating a multinozzle ink jet printer including

(a) generating a plurality of continuously flowing capillary ink streams;

(b) applying a stimulating signal to break up the capillary streams into droplet streams,

(c) placing an electrical charge on the droplets at the instant of break-off from the capillary streams; and

(d) sensing the charged droplets at a point downstream from the breakoff;

the method being characterised by

(e) calculating the time elapsing from droplet break-off to droplet sensing to produce an elapsed time signal;

(f) recording the elapsed time signal;

(g) repeating steps (c)—(f) of this claim for each stream;

(h) comparing the recorded times to determine the minimum and the maximum;

(i) identifying the stream with the minimum recorded time as the weakest driven stream and the stream with the maximum recorded time as the strongest driven stream; and

(j) adjusting the stimulating signal until the break-off distance for the strongest driven stream is identical to the break-off distance of the weakest driven stream.

**Patentansprüche**

1. Mehrfachdüsen-Tintenstrahldrucker, bie welchem im Betrieb Tintenstrahlen von einer Mehrfachdüsenplatte (26) ausgesandt und durch Anlegen einer Treiberspannung mit konstanter Frequenz an einen piezoelektrischen Kristall (24) in einzelne Tintentröpfchen aufgebrochen werden, Ladungselektrodenmittel (32) ausgewählte Tröpfchen aufladen und Abfühlmittel (48, 50) geladene Tröpfchen in jedem der Strahlen in einem bestimmten Abstand von der Düsenplatte abfühlen, dadurch gekennzeichnet, daß der Drucker Treibermittel (78) regelbarer Spannung zur Lieferung der Treiberspannung, wobei die Treibermittel regelbarer Spannung auf ein Treiberspannungseinstellsignal ansprechen, auf das Ausgangssignal der Fühlmittel (48, 50) ansprechende Elektronikmittel (60) zur Erzeugung eines die Tröpfchenflugzeiten für jeden der Strahlen, das heißt die Zeiten zwischen Tröpfchenaufladung und Abfühlen eines geladenen Tintentröpfchens, angebenden Satzes von Flugzeitsignalen, Mittel (66) zum Aufzeichnen und Vergleichen des Satzes von Flugzeitsignalen zur Bestimmung des Strahles mit der minimalen Flugzeit, das heißt des am schwächsten getriebenen Strahles, und des Strahles mit der maximalen Flugzeit, das heißt des am stärksten getriebenen Strahles, und auf den Satz von Signalen ansprechende Steuermittel (66) zur Erzeugung des Treiberspannungseinstellsignals zur Einstellung der Amplitude der Treiberspannung so, daß die Tröpfchen des am schwächsten und des am stärksten getriebenen Strahles im gleichen Abstand von der Düsenplatte wegbrechen, enthält.

2. Drucker nach Anspruch 1, bei welchem die Elektronikmittel einen Operationsverstärker (94), ein elektrisches Nulldurchgangsnetzwerk (98), welches mit dem Operationsverstärker betreibbar gekoppelt ist, und einen Flugzeitzähler (102), welcher mit dem elektrischen Nulldurchgangsnetzwerk gekoppelt ist, enthalten, wobei der Flugzeitzähler einen Freigabeeingang, einen Sperreingang und einen Ausgang aufweist.

3. Drucker nach Anspruch 1 oder Anspruch 2, bei welchem die Treibermittel (78) regelbarer Spannung einen multiplizierenden Digital-Analogwandler (116) mit einem Referenzsignaleingang und einem multiplizierenden Signaleingang, einen mit dem Ausgang des multiplizierenden Digital-Analogwandlers gekoppelten Kondensator (118) und einen Leistungsverstärker (122) zur Verstärkung eines vom Kondensator ausgegebenen Signals enthalten.

4. Drucker nach Anspruch 3, welcher ferner mit dem Referenzsignaleingang gekoppelte Signalerzeugungsmittel enthält, wobei die Signalerzeugungsmittel so betreibbar sind, daß die Signale mit einer festen Tropfentaktfrequenz und einer festen Amplitude erzeugen.

5. Drucker nach irgendeinem vorstehenden Anspruch, bei welchem die Abfühlmittel (48) innerhalb eines Abflußaufbaus (40) zum Auffangen nicht für das Drucken verwendeter Tröpfchen angeordnet sind.

6. Drucker nach Anspruch 5, welcher ferner zweite Abfühlmittel (50) für geladene Tröpfchen enthält, welche quer zu den Tintentröpfchenstrahlen angeordnet sind und zwischen den Ladungselektrodenmitteln und dem Abflußaufbau liegen.

7. Verfahren zum Betreiben eines Mehrfachdüsen-Tintenstrahldruckers, welches

(a) des Erzeugen einer Anzahl von kontinuierlich strömenden Kapillartintenstrahlen,

(b) das Anlegen eines Anregungssignals zum Aufbrechen der Kapillarstrahlen in Tröpfchenstrahlen,

(c) das Aufbringen einer elektrischen Ladung auf die Tröpfchen im Zeitpunkt des Abbrechens aus dem Kapillarstrahl, und

(d) das Abfühlen der geladenen Tröpfchen strömungsunterhalb des Abbruchs,

beinhaltet und gekennzeichnet ist durch

(e) das Berechnen der Zeit zwischen dem Tröpfchenabbruch und der Tröpfchenabfühlung zur Erzeugung eines die verstrichene Zeit wiedergebenden Zeitdauersignals,

(f) das Aufzeichnen des Zeitdauersignals,

(g) das Wiederholen der Schritte (c)—(f) dieses Anspruchs für jeden Strahl,

(h) das Vergleichen der aufgezeichneten Zeiten zur Bestimmung des Minimums und des Maximums,

(i) das Identifizieren des Strahls mit der minimalen aufgezeichneten Zeit als am schwächsten getriebener Strahl und des Strahles mit der maximalen aufgezeichneten Zeit als am stärksten getriebener Strahl, und

(j) das Einstellen des Anregungssignals, bis die Abbruchsentfernung für den am stärksten getriebenen Strahlmit der Abbruchsentfernung für den am schwächsten getriebenen Strahl identisch ist.

## Revendications

1. Imprimante à jet d'encre à buses multiples dans laquelle, pendant le fonctionnement, des jets d'encre sont émis par une plaque (26) portant plusieurs buses et sont subdivisés en gouttelettes individuelles d'encre par application d'une tension de commande à fréquence constante, un cristal piézoélectrique (24), des moyens (32) formant électrodes de charge chargent certaines des gouttelettes, qui sont sélectionnées, et des moyens de détection (48, 50) qui détectent des gouttelettes chargées dans chacun des jets à une distance prédéterminée de la plaque portant les buses; l'imprimante étant caractérisée en ce qu'elle comporte des moyens (78) formant étages d'attaque à tension variable et servant à délivrer lesdites tensions de commande, ces moyens formant étages d'attaque à tension variable étant sensibles à un signal de réglage de la tension de commande, des moyens électroniques (60) sensibles à la sortie des moyens de détection (48, 50) pour produire un ensemble de signaux de durées de parcours, qui indiquent les durées de parcours des gouttelettes pour chacun desdits jets, c'est-à-dire la durée s'écoulant entre le chargement de la gouttelette et la détection d'une gouttelette d'encre chargée, des moyens (66) servant à enregistrer et à comparer ledit ensemble de signaux de durées de parcours pour déterminer le jet pour laquelle la durée de parcours est minimum, c'est-à-dire le jet commandé le plus faible, et le jet pour lequel la durée de parcours est maximum, c'est-à-dire le jet commandé le plus intense, et des moyens de contrôle (66) sensibles audit ensemble de signaux pour produire ledit signal de réglage de la tension de commande afin de régler l'amplitude de cette dernière de manière que les gouttelettes situées dans les jets commandés le plus faible et le plus intense se subdivisent à la même distance de la plaque portant les buses.

2. Imprimante selon la revendication 1, dans laquelle les moyens électroniques comportent un amplificateur opérationnel (94), un détecteur électrique de passages à zéro (98) accouplé de façon active à l'amplificateur opérationnel, et un compteur (102) de durées de parcours, accouplé audit détecteur électrique de passages à zéro, ledit compteur de durées de parcours comportant une entrée de validation, une entrée d'invalidation et une sortie.

3. Imprimante selon la revendication 1 ou 2, dans laquelle les moyens (78) formant étages d'attaque à tension variable comportent un convertisseur numérique/analogique multiplicateur (116) possédant une entrée pour un signal de référence et une entrée pour un signal de multiplication, un condensateur (118) accouplé à la sortie dudit convertisseur numérique/analogique multiplicatif, et un amplificateur de puissance (122) servant à amplifier un signal délivré par le condensateur.

4. Imprimante selon la revendication 3, comportant en outre un dispositif générateur de signaux accouplé à l'entrée du signal de référence, ce dispositif générateur de signaux pouvant être actionné de manière à produire des signaux possédant une fréquence d'horloge fixe pour les gouttes et une amplitude fixe.

5. Imprimante selon l'une quelconque des revendications précédentes, dans laquelle les moyens de détection (48) sont disposés à l'intérieur d'un ensemble formant gouttière (40), destiné à collecter les gouttes non utilisées pour l'impression.

6. Imprimante selon la revendication 5, incluant en outre des seconds moyens (50) de détection des gouttelettes chargées, disposés transversalement par rapport aux jets des gouttelettes d'encre et entre les moyens formant électrodes de charge et l'ensemble formant gouttière.

7. Procédé de mise en oeuvre d'une imprimante à jet d'encre à buses multiples comprenant:

(a) la production d'une pluralité de jets d'encre capillaires s'écoulant de façon continue,

(b) l'application d'un signal de stimulation de manière à subdiviser les jets capillaires en jets formés de gouttelettes,

(c) l'application d'une charge électrique aux gouttelettes à l'instant de la subdivision des jets capillaires,

(d) la détection des gouttelettes chargées en un point situé en aval du point de subdivison, ce procédé étant caractérisé par:

(e) le calcul de la durée s'écoulant entre la subdivision en gouttelettes et la détection des gouttelettes de manière à produire un signal de durée écoulée,

(f) l'enregistrement du signal de durée écoulée,

(g) la répétition des phases opératoires (c)—(f) de la présente revendication pour chaque jet,

(h) la comparaison des durées enregistrées afin de déterminer le minimum et le maximum,

(i) l'identification du jet, pour laquelle la durée enregistrée est minimale, en tant que jet commandé le plus faible, et du jet, pour lequel la durée enregistrée est maximum, en tant que jet commandé le plus intense, et

(j) le réglage du signal de stimulation jusqu'à ce que la distance de subdivision pour le jet commandé le plus intense soit identique à la distance de subdivision pour le jet commandé le plus faible.

FIG. 1

FIG. 2

FIG. 3

FIG. 8

FIG. 9

## FIG. 4

FROM DROP
CHARGE SENSOR

54

R

96

94

96

ZERO
CROSSING
DETECTOR
98

101

FLIGHT
TIME
COUNTER
102

62

DIGITAL
FLIGHT TIME
OUTPUT

104

t₀

INTEGRATOR
109

PEAK
DETECTOR
100

A/D
CONVERTER
110

64

DIGITAL
AMPLITUDE
OUTPUT

108

## FIG. 5

112

114

MULTIPLYING
D/A CONVERTER
116

118

120

POWER
AMPLIFIER
122

124

DRIVE SIGNAL TO
DROP GENERATOR

74

DIGITAL WORD
FROM CONTROLLER

## FIG. 6

$V_{CE}$

104

TIME

t₀

## FIG. 7

$I_{SENSOR}$

106

TIME

t₀          t$_S$

3

FIG. 10